(19) Europäisches Patentamt / European Patent Office / Office européen des brevets

(11) **EP 3 134 572 B1**

(12) **EUROPEAN PATENT SPECIFICATION**

(45) Date of publication and mention
of the grant of the patent:
**10.06.2020 Bulletin 2020/24**

(21) Application number: **15720547.7**

(22) Date of filing: **24.04.2015**

(51) Int Cl.:
*D21H 27/00* (2006.01)   *D21H 13/20* (2006.01)
*D21H 13/24* (2006.01)   *D21H 19/20* (2006.01)
*D21H 19/82* (2006.01)   *D21H 19/84* (2006.01)
*D21H 21/14* (2006.01)   *D21H 15/02* (2006.01)
*D21H 17/37* (2006.01)   *B24D 3/00* (2006.01)
*B24D 11/00* (2006.01)   *B24D 11/02* (2006.01)

(86) International application number:
**PCT/US2015/027424**

(87) International publication number:
**WO 2015/164685 (29.10.2015 Gazette 2015/43)**

(54) **ABRASIVE BACKERS AND METHODS OF THEIR FORMATION**

ABRASIVE TRÄGER UND VERFAHREN ZUR BILDUNG DAVON

SUPPORTS ABRASIFS ET LEURS PROCÉDÉS DE FORMATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2014   US 201461983648 P**
**14.10.2014   US 201462063571 P**

(43) Date of publication of application:
**01.03.2017   Bulletin 2017/09**

(73) Proprietor: **Neenah Paper, Inc.**
**Alpharetta, Georgia 30005 (US)**

(72) Inventor: **VERVACKE, Steven, L.**
**Alpharetta, GA 30005 (US)**

(74) Representative: **Thurston, Joanna**
**Withers & Rogers LLP**
**4 More London Riverside**
**London SE1 2AU (GB)**

(56) References cited:
**WO-A1-02/32626          WO-A1-99/59778**
**WO-A2-2006/073795**

**Description**

## BACKGROUND

Vulcanized fiber sheets have been traditionally used as used in aggressive sanding applications. Such vulcanized fiber sheets are typically formed from a cotton base that has been partially gelatinized by dissolving some of the cotton cellulose with an acid, such as a Bronsted acid (e.g., sulfuric acid) or a Lewis acid (e.g., zinc chloride). After the excess acid is leached out of the fiber, the gelatinized fiber base is pressed together with other plies to form a multiple ply product commonly known as a "Vulcanized fiber sheet" or "Vulcanized fiber" in short hand.

While Vulcanized fiber sheets are tough and durable, the sheet is very hydroscopic and can absorb moisture (i.e., water) readily. Because of this property, shape stability of the Vulcanized fiber sheet is poor or its hygroexpansivity is very high. As such, when made into a coated abrasive sheet, the surface opposite the grit coating can swell and contract with ease, leading to the coated abrasive sheet to change shape dramatically with changes in the relative humidity.

Another feature of a Vulcanized fiber sheet is its very high Finch edge tear value. That is, a Vulcanized fiber sheet is extremely difficult to tear on an undamaged edge. However, if the edge is damaged, a Vulcanized fiber sheet tears easily. This ability to tear easily when damaged or otherwise initiated can be disastrous during a sanding operation. For example, a sand disk constructed from Vulcanized fiber sheet that is nicked can rapidly tear apart during aggressive sanding.

As such, a need exists for an improved sheet that mitigates the Vulcanized fiber sheet's undesirable properties.

## SUMMARY

Objects and advantages of the invention will be set forth in part in the following description, or may be obvious from the description, or may be learned through practice of the invention.

Cellulose-based abrasive backers are generally provided. The cellulose-based abrasive backer as claimed includes a saturated nonwoven web defining a first surface and a second surface, wherein the saturated nonwoven web comprises a cured saturant composition and a non woven web of fibers, wherein the fibers consist essentially of 80 wt% to 96 wt% cellulosic fiber and 4 at % to 20 wt% synthetic polyester fiber, wherein about 80 wt% to about 100 wt% of the cellulosic fibers within the nonwoven web are hardwood fibers, wherein the synthetic fibres serve as high tensile strength fibres to increase the tear resistance of the non-woven web, and wherein the cured saturant composition includes a curable latex polymer binder, a film forming resin, and optional additional components. In addition, a top coating is positioned on the first surface of the saturated nonwoven web. Optionally, a backside coating is positioned on the second surface of the saturated nonwoven web.

Methods are also generally provided for forming a cellulose-based abrasive backer. The method comprises: saturating a nonwoven web with a saturating composition to form a saturated nonwoven web, wherein the nonwoven web comprises

a mixture of fibers consisting of 80 wt% to 96 wt% cellulosic fibers and 4 wt% to 20 wt% synthetic polyester fibers, and wherein the saturating composition comprises a curable latex polymer, a film forming resin and optional components wherein the synthetic fibers serve as high tensile fibers to increase the tear resistance of the non-woven web; and wherein about 80 wt% to 100 wt% of the cellulosic fibers within the non-woven web are hardwood fibers;

calendering the saturated nonwoven web;

curing the saturated nonwoven web such that the curable latex polymer is crosslinked; and applying a top coating onto at least one surface of the cured, saturated nonwoven web.

Multi-ply cellulose-based abrasive backers are also generally provided that include at least two plies laminated together, with each ply being a saturated nonwoven web comprising cellulosic fibers, synthetic fibers, and a cured saturant composition where about 80 wt% to about 100 wt% of the cellulosic fibers within the nonwoven web are hardwood fibers.

Other features and aspects of the present invention are discussed in greater detail below.

## BRIEF DESCRIPTION OF THE DRAWINGS

A full and enabling disclosure of the present invention, including the best mode thereof to one skilled in the art, is set forth more particularly in the remainder of the specification, which includes reference to the accompanying figures, in which:

Fig. 1 shows an exemplary cellulose-based abrasive backer formed from a single ply;
Fig. 2 shows the exemplary single ply cellulose-based abrasive backer of Fig. 1 with an abrasive layer;

Fig. 3 shows an exemplary cellulose-based abrasive backer formed from three ply sheets laminated together;
Fig. 4 shows another exemplary cellulose-based abrasive backer formed from four ply sheets laminated together;
Fig. 5 shows yet another exemplary cellulose-based abrasive backer formed from five ply sheets laminated together;
Fig. 6 shows still another exemplary cellulose-based abrasive backer formed from six ply sheets laminated together; and

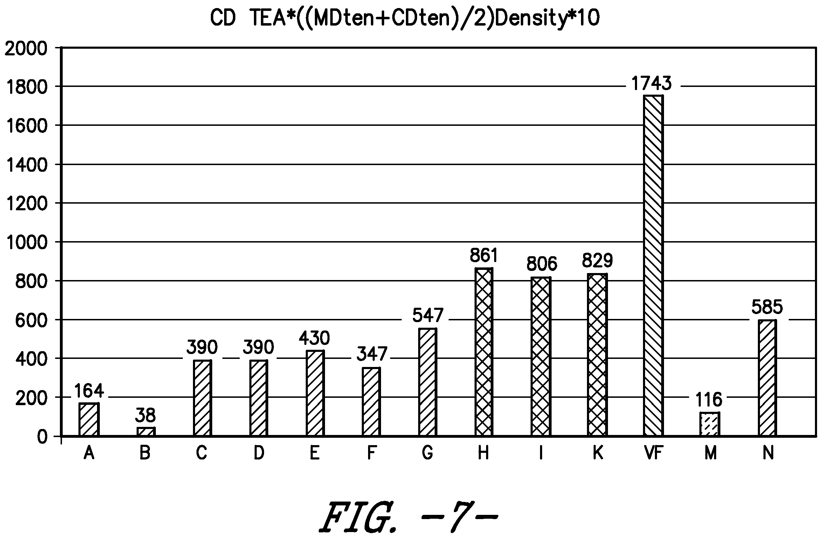

Fig. 7 shows the toughness per unit density of several samples according to Example 3.

Repeat use of reference characters in the present specification and drawings is intended to represent the same or analogous features or elements of the present invention.

## DEFINITIONS

The term "abrasive backing" is used herein to mean a paper, typically a polymer- reinforced paper, which is intended to be provided with a layer of abrasive particles. The term "abrasive paper" refers to the combination of an abrasive backing and a layer of abrasive particles.

As used herein, the term "cellulosic fibrous material" generally refers to a material that contains wood based-pulps or other non-wood derived fiber sources. The pulp may be a primary fibrous material or a secondary fibrous material ("recycled"). Sources of pulp fibers include, by way of example, woods, such as softwoods and hardwoods; straws and grasses, such as rice, esparto, wheat, rye, and sabai; canes and reeds, such as bagasse; bamboos; woody stalks, such as jute, flax, kenaf, and cannabis; bast, such as linen and ramie; leaves, such as abaca and sisal; and seeds, such as cotton and cotton liners.

As used herein, the term "polymer" generally includes, but is not limited to, homopolymers; copolymers, such as, for example, block, graft, random and alternating copolymers; and terpolymers; and blends and modifications thereof. Furthermore, unless otherwise specifically limited, the term "polymer" shall include all possible geometrical configurations of the material. These configurations include, but are not limited to isotactic, syndiotactic, and random symmetries.

The term "thermoplastic" is used herein to mean any material formed from a polymer which softens and flows when heated above its softening point and/or melting point; such a polymer may be heated and softened a number of times without suffering any basic alteration in characteristics, provided heating is below the decomposition temperature of the polymer. Examples of thermoplastic polymers include, by way of illustration only, polyolefins, polyesters, polyamides, polyurethanes, acrylic ester polymers and copolymers, polyvinyl chloride, polyvinyl acetate, etc. and copolymers thereof.

"Denier" means the weight in grams of 9,000 meters of fiber.

In the present disclosure, when a layer is being described as "on" or "over" another layer, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the laminate to the viewer.

As used herein, the term "about" means approximately, rounded up or down to, reasonably close to, in the vicinity of, or the like.

As used herein, the term "substantially free" means no more than an insignificant trace amount present and encompasses completely free (e.g., 0 wt% up to about 0.01 wt%).

It is to be understood that the use of "comprising" in conjunction with the embodiments described herein specifically discloses and includes the embodiments that "consist essentially of" the named components (i.e., contain the named components and no other components that significantly adversely affect the basic and novel features disclosed) and the embodiments that "consist of" the named components (i.e., contain only the named components except for contaminants which are naturally and inevitably present in each of the named components).

## DETAILED DESCRIPTION

Reference now will be made to the embodiments of the invention, one or more examples of which are set forth below. Each example is provided by way of an explanation of the invention, not as a limitation of the invention. In fact, it will be apparent to those skilled in the art that various modifications and variations can be made in the invention without departing from the scope or spirit of the invention. For instance, features illustrated or described as one embodiment can be used on another embodiment to yield still a further embodiment. Thus, it is intended that the present invention cover such modifications and variations as come within the scope of the appended claims and their equivalents. It is to be understood by one of ordinary skill in the art that the present discussion is a description of exemplary embodiments only, and is not intended as limiting the broader aspects of the present invention, which broader aspects are embodied exemplary constructions.

A. Cellulose-Based Abrasive Backers

In one embodiment, a cellulose-based abrasive backer is generally provided, along with methods of its formation. The cellulose-based abrasive backer generally has high durability and high strength such that the cellulose-based abrasive backer is particularly suitable for use as an abrasive backing in applications where aggressive sanding (e.g., metal working) is performed.

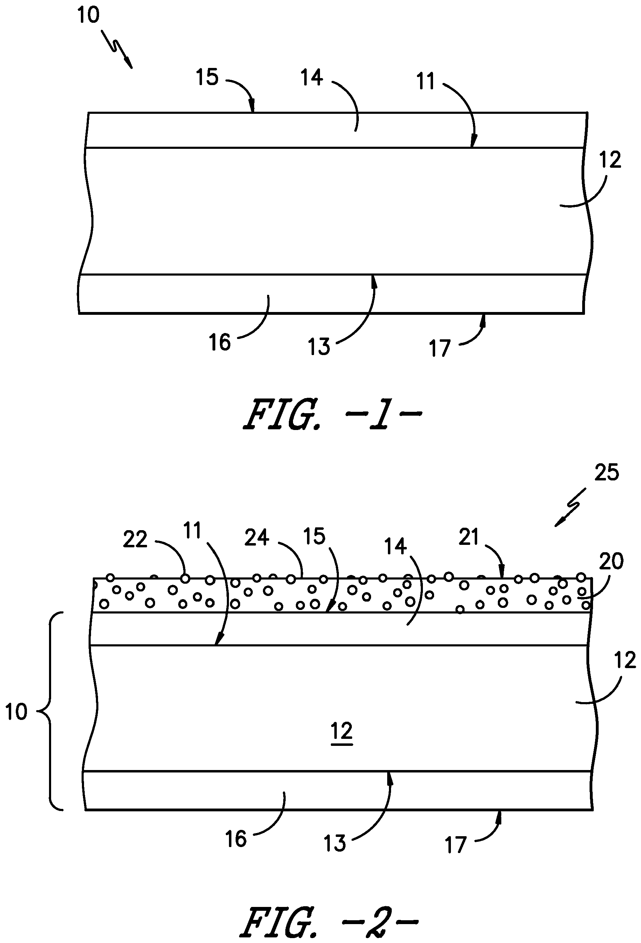

Referring to Fig. 1, an exemplary single ply cellulose-based abrasive backer 10 is shown formed from saturated, cellulosic base sheet 12 defining a first surface 11 and a second surface 13. A top coating 14 is applied on the first surface 11 of the saturated, cellulosic base sheet 12, and a backside coating 16 is applied on the second surface 13 of the saturated, cellulosic base sheet 12. As such, in the embodiment shown, the top coating 14 and the backside coating 16 define, respectively, a top outer surface 15 and a bottom outer surface 17 of the backer 10. In another embodiment, an additional coating or coatings (not shown) can optionally be present on the top outer surface 15 of the backer 10 and/or the bottom outer surface 17 of the backer 10 to define the exposed surface. Thus, the cellulose- based abrasive backer 10 can be further tailored depending on the desired end use of the sheet through additional coating(s) thereon. For example, the additional coatings can be applied at a basis weight of about 3 gsm to about 30 gsm.

Each of the components of the cellulose-based abrasive backer provided herein is discussed in greater detail below with respect to the method of forming the cellulose-based abrasive backer.

I. Saturated, Cellulosic Base Sheet 12

The saturated, cellulosic base sheet 12 is formed from a nonwoven web that includes hardwood cellulosic fibers and synthetic fibers.

Softwoods (e.g., longleaf pine, shortleaf pine, loblolly pine, slash pine, Southern pipe, black spruce, white spruce, jack pine, balsam fir, douglas fir, western hemlock, redwood, red cedar, etc.) and hardwoods (e.g., aspen, birch, beech, oak, maple, eucalyptus, gum, etc.) are the commonly used sources of cellulose fibers. Currently, softwood fibers are known to produce paper having higher tear and overall strength properties compared to papers formed from hardwood fibers. However, it has been surprisingly found that the use of at least about 80% by weight hardwood fibers in the presently disclosed methods and backers provides increased strength properties over methods and backers that contain mostly softwood fibers.

Thus, the saturated, cellulosic base sheet 12 is formed from a nonwoven web comprising cellulosic fibers, with about 80 wt% to 100 wt% of the cellulosic fibers being hardwood fibers (based on the dried weight of the total cellulosic material in the nonwoven web), such as about 90 wt% to 100 wt% of the cellulosic fibers being hardwood fibers. In particular embodiment, the nonwoven web includes cellulosic fibers that are about 95 wt% to 100 wt% hardwood fibers (e.g., about 99 wt% to 100 wt% of the cellulosic fibers being hardwood fibers). In particular embodiment, the nonwoven web is substantially free from any softwood fibers. That is, hardwood fibers can form substantially 100% by weight of the total cellulosic fibers in the nonwoven web (i.e., consist essentially of hardwood cellulosic fibers) without the presence of any significant amount of softwood fibers. Without wishing to be bound by any particular theory, it is believed that the inclusion of too much softwood fibers (e.g., in an amount over 20 wt% of the total cellulosic material) would adversely affect the strength of the resulting saturated, cellulosic base sheet 12 and, in turn, the abrasive backer 10.

Hardwood fibers are can be formed from woods including, but not limited to, aspen, birch, beech, oak, maple, eucalyptus, gum, or combinations thereof. Hardwood fibers are generally short fibers that have an average length of less than about 3 mm (e.g., about 0.5 mm to about 2 mm). For example, eucalyptus fibers, such as Primacell Eucalyptus, are commercially available from Klabin Riocell. Other hardwood pulp fibers are available under the trade designations Sappi NBSK from Sappi Limited of Cloquet, MN, St. Croix hardwood from Georgia-Pacific Corporation, and Leaf River hardwood from Georgia-Pacific Corporation.

To make the nonwoven web, the hardwood fibers are subjected to a pulping process to form hardwood pulp fibers. The pulp fibers may generally be chemical or mechanical pulp. Chemical pulp refers to fibrous materials from which most non-cellulose components are removed by chemical pulping without substantial mechanical post-treatment. Sulfite or sulfate (Kraft) chemical processes, for example, involve the dissolution of the lignin and hemi-cellulose components from the wood to varying degrees depending on the desired application. Mechanical pulp refers to fibrous materials made of wood processed by mechanical methods. Mechanical pulp is subdivided into the purely mechanical pulps (e.g., groundwood pulp and refiner mechanical pulp) and mechanical pulps subjected to chemical pretreatment (e.g., chemimechanical pulp or chemithermomechanical pulp).

Although not required, the cellulosic fibrous material is typically a chemical pulp. Examples of such chemical pulps include, for instance, sulfite pulps, Kraft pulps (sulfate), soda pulps (cooked with sodium hydroxide), pulps from high-pressure cooking with organic solvents, and pulps from modified processes. Sulfite and Kraft pulps differ considerably in terms of their fibrous material properties. The individual fiber strengths of sulfite pulps are usually much lower than those of Kraft pulps. The mean pore width of the swollen fibers is also greater in sulfite pulps and the density of the cell wall is lower compared to Kraft pulps, which simultaneously means that the cell-wall volume is greater in sulfite pulps. Due to their higher strength, lower pore width, and higher density, Kraft pulps are typically employed in the present invention. While the present invention has applicability to any of the above chemical pulping processes, it is particularly useful with the Kraft process.

As stated, synthetic fibers are also used in conjunction with the hardwood cellulosic fibers to increase the tear resistance of the fibrous web.

The synthetic fibers are polyester fibers, such as formed from a long-chain synthetic polymer composed of at least 85% by weight of an ester of a substituted aromatic carboxylic acid, including, but not restricted to, substituted terephthalate units and parasubstituted hydroxybenzoate units.

No matter the composition, the synthetic fibers generally have an average length that is long enough to add strength to the nonwoven web while being short enough for paper processing of the nonwoven web. For example, the synthetic fibers can have an average length that is about 0.25 inches to about 1.5 inches (e.g., about 0.5 inches to about 1 inch).

The fiber denier, however, may be adjusted to suit the capabilities of the finished article, though overall diameter of fibers used in most embodiments disclosed herein can generally be referred to as fine fibers. Fiber diameter may be measured and reported in a variety of fashions. Generally, fiber diameter is measured in denier per filament. Denier is a textile term which is defined as the grams of the fiber per 9000 meters of that fiber's length. Monofilament generally refers to an extruded strand having a denier per filament (dpf) greater than 25. Fine denier fiber generally refers to fiber having a denier of about 25 or less. Microfiber generally refers to fiber having a diameter not greater than about 100 micrometers. Fibers useful in embodiments disclosed herein may include fibers having a diameter corresponding to fine denier (e.g., about 3 dpf to about 25 dpf). In some embodiments, the fiber diameter may range from about 5 dpf to about 15 dpf.

The shape of the fiber is not limited. For example, in some embodiments the fibers may have a circular or elliptical cross-sectional shape. In other embodiments, the fibers may have different shapes, such as a trilobal shape, or a flat (i.e., "ribbon" like) shape.

To form the nonwoven web, the cellulosic material and the synthetic fibers are mixed together to form a fibrous mixture. The amount of synthetic fibers in the fibrous mixture can be controlled such that the resulting nonwoven web retains the paper properties of the cellulosic material with added strength from the synthetic fibers. The fibrous mixture contains about 4 wt% to about 20 wt% synthetic fibers (e.g., about 7 wt% to about 12 wt%) and about 80 wt% to about 96 wt% of cellulosic fibers (about 88 wt% to about 93 wt%), based on the dried weight of the resulting nonwoven web.

The mixed fibrous material is generally placed in a conventional papermaking fiber stock prep beater or pulper containing a liquid, such as water. The fibrous material stock is typically kept in continued agitation such that it forms a suspension. If desired, the cellulosic material and/or the fibrous material may also be subjected to one or more refinement steps to provide a variety of benefits, including improvement of the tensile and porosity properties of the fibrous web. Refinement results in an increase in the amount of intimate contact of the fiber surfaces and may be performed using devices well known in the art, such as a disc refiner, a double disc refiner, a Jordan refiner, a Claflin refiner, or a Valley-type refiner.

The resulting fibrous suspension may then be diluted and readied for formation into a fibrous web using conventional papermaking techniques. For example, the web may be formed by distributing the suspension onto a forming surface (e.g., wire) and then removing water from the distributed suspension to form the web. This process may involve transferring the suspension to a dump chest, machine chest, clean stock chest, low density cleaner, headbox, etc., as is well known in the art. Upon formation, the fibrous web may then be dried using any known technique, such as by using convection ovens, radiant heat, infrared radiation, forced air ovens, and heated rolls or cans. Drying may also be performed by air drying without the addition of thermal energy.

Various additives may be applied to the cellulosic fibrous material during formation of the fibrous web or after formation of the nonwoven web (e.g., to the dried fiber). For example, wet-strength agents may be used to improve the strength properties of the web during formation. The wet-strength agents may be present in an amount from about 0.001 wt.% to about 5 wt.%, in some embodiments from about 0.01 wt.% to about 2 wt%, based on the dry weight of the fibers. Wet strength agents are typically water soluble, cationic oligomeric or polymeric resins that are capable of bonding with the cellulosic fibers. For example, some suitable wet-strength agents are polyamine-epichlorohydrin, polyamide epichlorohydrin or polyamide-amine epichlorohydrin resins (collectively "PAE" resins). Examples of these materials are described in U.S. Patent Nos. 3,700,623 to Keim and 3,772,076 to Keim, which are incorporated herein in their entirety by reference thereto for all purposes. Suitable PAE resins are available from Ashland, Inc. under the designation "KYMENE®" (e.g., KYMENE® 913A). KYMENE® 913A, for example, is believed to be a polyamide epicholorohydrin polymer that contains both cationic sites, which may form ionic bonds with anionic groups on the pulp fibers, and azetidinium groups, which may form covalent bonds with carboxyl groups on the pulp fibers and crosslink with the polymer backbone when cured. Other suitable polyamide-epichlorohydrin resins are described in U.S. Patent Nos. 3,885,158 to Petrovich; 3,899,388 to Petrovich; 4,129,528 to Petrovich; 4,147,586 to Petrovich; and 4,222,921 to van Eanam, which are incorporated herein in their entirety by reference thereto for all purposes.

Other wet strength agents may also be employed in certain embodiments of the present invention. For example, other suitable wet strength agents may include dialdehyde starch, polyethylene imine, mannogalactan gum, glyoxal, and dialdehyde mannogalactan. Particularly useful wet-strength agents are water-soluble polyacrylamide resins available from Cytec Industries, Inc. of West Patterson, New Jersey under the designation PAREZ® (e.g., PAREZ® 631NC). The PAREZ® resins are formed from a polyacrylamide-glyoxal polymer that contains cationic hemiacetal sites. These sites may form ionic bonds with carboxyl or hydroxyl groups present on the cellulosic fibers to provide increased strength to the web. Because the hemiacetal groups are readily hydrolyzed, the wet strength provided by the resins is primarily temporary. Such resins are believed to be described in U.S. Patent Nos. 3,556,932 to Coscia, et al. and 3,556,933 to Williams, et al., which are incorporated herein in their entirety by reference thereto for all purposes.

The basis weight of nonwoven web can be any basis weight useful for providing a paper backing ply sheet, such as from about 10 gsm to about 200 gsm or greater. For example, in some embodiments, the nonwoven web can have a basis weight of from about 50 gsm to about 100 gsm. Also, the nonwoven web can have any thickness useful for providing a paper backing ply sheet, such as about 0.05 millimeters to about 1 millimeter.

Various other additives may also be employed in the nonwoven web. The additives may be applied directly to the web or fibers, in conjunction with the binder composition or optional adhesive coating, or as a separate coating. By way of example, suitable additives may include antifoaming agents, pigments, processing aids, and dispersing agents. Examples of antifoaming agents include, but are not limited to, products such as NALCO® 7518 available from Nalco Chemical Company or DOW Corning® Antifoam available from Dow Corning Corporation. Dispersing agents or surfactants include, but are not limited to, products such as TAMOL® 731A available from Rohm & Haas Co., PLURONIC® F108 available from BASF Corporation, SMA® 1440 Resin available from ATOFINA Chemicals, Inc., and TERGITOL® 15S available from Union Carbide Corp. Examples of processing aids may include, but are not limited to, products such as NOPCOTE® DC-100A available from Geo Specialty Chemicals, Inc., SCRIPSET® 540 available from Solutia, Inc. and AQUAPEL® 752 available from Hercules Incorporated. Examples of pigments used to increase opacity include but are not limited to, titanium dioxide such as TI-PURE® Rutile Titanium Dioxide available from E.I. Du Pont De Nemours & Co. and kaolin pigments, which are available from a variety of manufacturers. A wide range of pigments and dyes may also be added to impart color to the saturated sheet. The foregoing list of categories of additives and examples of categories is provided by way of example and is not intended to be exhaustive.

## II. Saturating the Cellulosic Base Sheet

Upon drying the nonwoven web, a saturating composition can be applied onto or into the nonwoven web. The saturating composition includes a curable latex polymeric binder, a film forming resin, and optional additional components.

### a. Curable Latex Polymeric Binder

As used herein, the term "latex polymer" refers to an emulsion of the polymer in a solvent (typically water). The curable latex polymers are configured to cure upon the application of heat and/or pressure creating a stronger form of the polymer material, such as a crosslinked, 3-dimensional structure.

Suitable latex polymers include, but are not limited to polyacrylates, including polymethacrylates, poly(acrylic acid), poly(methacrylic acid), and copolymers of the various acrylate and methacrylate esters and the free acids; styrene-butadiene copolymers; ethylene-vinyl acetate copolymers; nitrile rubbers or acrylonitrile-butadiene copolymers; poly(vinyl chloride); poly(vinyl acetate); ethylene-acrylate copolymers; vinyl acetate-acrylate copolymers; neoprene rubbers or trans-1,4-polychloroprenes; cis-14-polyisoprenes; butadiene rubbers or cis- and trans-1,4-polybutadienes; ethylene-propylene copolymers or mixtures thereof.

In one embodiment, the latex polymer can include functionalized groups configured to facilitate curing of the latex polymer. For example, the latex polymer can include, but are not limited to, carboxyl groups, amine groups, and pyridyl groups. Without wishing to be bound by theory, it is believed that these functionalized groups can facilitate the curing of the latex polymer, as well as the crosslinking, by the presence of the polar groups on the latex polymer.

The latex polymer can be provided in an emulsion, typically an aqueous emulsion. The solids content of the latex polymer emulsion can be from about 1% by weight to about 65% by weight, such as from about 10% to about 60%. In one particular embodiment, the solids content of the latex polymer emulsion is from about 40% to about 55% by weight.

### b. Film Forming Resin

In addition to the latex polymer, a film forming resin is included in the saturant composition. The latex polymer is crosslinked upon curing to the film forming resin. For example, the latex polymer may be self-crosslinking, with the aid of a crosslinking agent.

The film forming resin includes, in one particular embodiment, a styrene maleic anhydride copolymer, which is optionally esterfied. "Styrene maleic anhydride copolymer," as used herein, means any polymer obtained by copolymerization of one or more maleic anhydride comonomers and of one or more styrene comonomers, the maleic anhydride comonomers optionally being partially or completely hydrolysed. In certain embodiments, the optionally-esterfied styrene maleic anhydride copolymer has styrene and maleic anhydride monomers in a molar ratio of 1:3 to 3:1, more preferably in a molar ratio of 1:2 to 2:1, and more preferably in a molar ratio of about 1:1, including all ranges and subranges therebetween such as 1.2:1 and 1.4:1.

According to particular embodiments, the optionally-esterified styrene maleic anhydride copolymer has a weight-average molecular weight ranging from about 5,000 to 500,000, preferably from about 10,000 to 300,000, and most preferably from about 100,000 to 200,000.

The optionally-esterified styrene maleic anhydride copolymer, in one particular embodiment, has a glass transition temperature (Tg) ranging from about 100 °C to 175 °C, preferably from about 125 °C to 160 °C, and more preferably from about 135 °C to 155 °C.

"Esterified styrene maleic anhydride copolymer" as used herein means a styrene maleic anhydride copolymer which has been esterified using a small alcohol compound. Preferably, the small alcohol compound has fewer than 8 carbon atoms, preferably five carbon atoms or fewer. For example, a styrene maleic anhydride copolymer can be esterified via standard esterification techniques using butanol, isobutanol, propanol, isopropanol, ethanol, methanol or any mixture of these alcohols, to produce an esterified styrene maleic anhydride copolymer. Such esterification does not have to be complete. Rather, partial esterification can occur and, in fact, is preferred in accordance with the present invention.

Particularly preferred esterified styrene maleic anhydride copolymers include, but are not limited to, those available from Ashland, Inc. (Covington KY) under the Scripset® name. Such commercially available products include solid powder products such as, for example, Scripset® 540, Scripset® 550 and Scripset® 810. An example of a particularly preferred esterified styrene maleic anhydride copolymer is a mixed methyl and isobutyl partial ester sold under the name Scripset® 540. Alternatively, suitable examples of non-esterified styrene maleic anhydride copolymers include, but are not limited to, Ashland, Inc. products Scripset® 520 (styrene/maleic anhydride copolymer). In one particular embodiment, the film forming resin that is crosslinked to the latex polymer is an estrified styrene-maleic anhydride (SMA) resin (e.g., Scripset® 540, available from Ashland Specialty Chemicals, Inc.) or an epoxy resin.

The level of resin employed can vary over a wide range depending upon the types of resin and latex polymer used. For example, the resin can be from about 0.1% to about 10% by weight of the dried binder composition, such as from about 0.5% to about 5%.

c. Optional Components

Other components can be included in the saturant composition, as desired. For example, an antioxidant compound can be included in the saturating composition. Antioxidants help inhibit oxidation of the saturating composition during the curing process. Oxidation can discolor the saturating composition and degrade its final physical properties. Examples of antioxidants include, but are not limited to, substituted phenolic compounds such as butylated dihydroxyanisole, di-tert-butyl-p-cresol, and propyl gallate. Additional examples of antioxidants include aromatic amines, such as, di-beta-naphthyl-para-phenylenediamine and phenyl-beta-naphthylamine. If used, the antioxidants may be included in the formulation at a concentration of greater than about 0 parts per one hundred parts solids, based on the weight of the latex polymer. For example, the antioxidants may be included in the formulation at a concentration of less than about 10% by weight, preferably, less than about 5%, more preferably, less than about 2%, based on the weight of the latex polymer. In one particular embodiment, a phenol-type antioxidants can be included in the saturating composition, such as the phenol-type antioxidant available under the name Bostex 24 from Akron Dispersions of Akron, Ohio.

Additional materials, such as particles, fillers, emulsifying agents and the like can be included in the saturating composition, if desired. Suitable particles may include, for instance, silica or silicates, clays, borates, and the like. In addition or in the alternative to the components identified above, the saturating composition may also include other additives for providing the saturating composition with desirable qualities. Examples include, but are not limited to, chemicals for pH adjustment, surfactants, etc. For example, in one embodiment, ammonia can be present in the saturating composition. Trisodium phosphate can be included in the saturating composition to help control the pH of the emulsion, as an emulsifier, and/or as a thickening agent.

d. Saturation

The saturating composition can be applied to the paper backing sheet according to any method, including before, after, or during the paper making process. Preferably, the saturating composition is saturated into the fibrous web after it is formed. Any known saturation technique may be employed, such as brushing, flooded nip saturation, doctor blading, spraying, and direct and offset gravure coating. For example, the web may be exposed to an excess of the solution and then squeezed. The squeezing of excess saturating composition from the web may be accomplished by passing the web between rollers. If desired, the excess saturating composition may be returned to the supply for further use. After squeezing out excess material, the saturated web may then be dried. Other suitable techniques for impregnating a web with a saturating composition are described in U.S. Patent No. 5,595,828 to Weber and U.S. Patent Application Publication No. 2002/0168508 to Reed, et al., which are incorporated herein in their entirety by reference thereto for all purposes.

The amount of the saturating composition applied may vary depending on the desired properties of the web, such as the desired permeability. Typically, the saturating composition is present at an add-on level of about 10% to about 100%, and in some embodiments, from about 40% to about 80%. The add-on level is calculated by dividing the dry weight of the saturating composition applied by the dry weight of the web before treatment, and multiplying the result by 100.

The saturated nonwoven web is calendered after saturation. Calendering the saturated nonwoven web can increase the softness and smoothness of the sheet. When desired, the saturated nonwoven web can be calendered according to any process. Calendering generally involves pressing the saturated nonwoven web in a nip formed by a first and second calendering rolls. The effect of calendering on the saturated nonwoven web depends upon the temperature, the pressure applied, and the duration of the pressure. For purposes herein, calendering can be carried out at either at ambient or elevated temperatures. Suitable calendering pressures can be from about 50 to about 2000 pounds-force per linear inch (pli), desirably from about 100 to about 1600 pli, more desirably from about 300 to about 1000 pli, and even more desirably from about 400 to about 600 pli. Suitable temperatures can be from about 20 °C to about 240 °C, desirably from about 20 °C to about 140 °C, more desirably from about 20 °C to about 90 °C.

The duration of calendering can be varied in conjunction with the nip pressure and/or the composition of the calender rolls to produce the desired smoothness of the paper backing for the sheet. For example, softer calender rolls such as fiber-filled rolls tend to compress to form a larger contact area in the nip, thus increasing the duration of the calendering. Hard steel rolls compress more, thus decreasing the duration of the calendering. In one arrangement, the calender nip comprises a steel roll and a soft fiber-filled roll. In another arrangement, for example, a production supercalender stack may include more than two rolls, desirably from about nine to about 11 rolls, stacked upon each other in a vertical arrangement. Desirably the stacked rolls alternate between steel and fiber-filled rolls. With such an arrangement, the paper can be exposed to various pressures, up to about 1600 pli, and a number of nips, for example from one to about eight, in order to develop the desired smoothness level.

The saturated, calendered nonwoven can be dried to remove the solvent from the saturating composition. For example, the saturated nonwoven web may be heated to a temperature of at least 100° C, and in some embodiments at least about 150° C, such as at least about 200° C. Suitable drying techniques may include heating with, for example, a conventional oven, microwave, forced air, heated roll, can, thru-air drying, and so forth. Additionally, the saturated, calendered nonwoven can be cured such that the latex polymer of the saturating composition crosslinks to form a three dimensional polymeric structure. Thus, the crosslinked latex polymer can help bind the fibers of the nonwoven web together, either mechanically and/or chemically.

No matter the particularly processing steps of the nonwoven web, the nonwoven web is kept at temperatures below that of the softening point or melting point of the synthetic fibers such that the synthetic fibers keep their as-laid shape and physical construction in the final ply sheet orientation (and resulting abrasive backer laminate). Thus, the structural and physical integrity of the synthetic fibers is kept intact in the individual ply sheets in order to allow the synthetic fibers to provide strength properties to the ply sheet.

However, in certain embodiments, a polymeric binder material may be included within the nonwoven web in the form of a binder fiber that melts during such processing to provide increased bonding within the nonwoven web.

III. Top Coating

A top coating 14 is applied onto the nonwoven web. The top coating 14 can be a film forming coating, a barrier coating, or a semiporous coating. In one embodiment, the top coating 14 is a barrier coating applied onto the nonwoven web following saturation. Such a barrier coating can be applied from a barrier composition that can include, independently, any of the materials discussed above with respect to the saturant composition.

Particularly suitable latex polymeric binders are those that adhere or bond well to the saturated, nonwoven web 12. For example, one particularly suitable latex polymeric binder for the barrier coating includes an acrylic latex binder. Suitable polyacrylic latex binders can include polymethacrylates, poly(acrylic acid), poly(methacrylic acid), and copolymers of the various acrylate and methacrylate esters and the free acids; ethylene-acrylate copolymers; vinyl acetate-acrylate copolymers, and the like. Suitable acrylic latex polymers that can be utilized as the latex polymeric binder in the barrier coating include those acrylic latexes sold under the trade name HYCAR® by The Lubrizol Corporation (Wickliffe, Ohio), such as HYCAR 26706 acrylic emulsion.

The latex polymeric binders for the saturant composition and the barrier layer can be the same or different. Desirably, the latex polymeric binder of the barrier coating adheres or bonds well to the surface 11 of the saturated nonwoven web 12. Additionally, the latex polymeric binder of the barrier coating can be configure to flow sufficiently well during any subsequent calendaring (e.g., soft nip calendaring). For example, latex polymeric binders having viscosities ranging from 30-50 centipoise may be expected to flow sufficiently well.

The thickness of the barrier coating 14 can vary according to the intended use for the resulting adhesive backing. For example, a thinner barrier coating can be utilized for coarse grit abrasive products, e.g., abrasives having particle sizes of 200 mesh or greater (the term "mesh" is used herein to mean U.S. Standard Sieve mesh). On the other hand, a thicker barrier coating may be used for finer grit products which are to be used for polishing or fine surface finishing. A practical minimum layer thickness is about 10 micrometers, whereas the practical maximum layer thickness is about 250 micrometers. However, thinner or thicker layers can be employed, if desired, provided that the layers are continuous. Thermoplastic polymeric compositions which are inherently stiff will be more useful for coarse grit products, while softer or elastomeric thermoplastic polymeric compositions like ethylene- vinyl acetate copolymers and polyurethanes will be more useful for such fine grit products as fine sanding and polishing cloths.

In another exemplary barrier coating, the top coating 14 can be formed from a bond layer on the first surface and a barrier layer on the bond layer, as disclosed in U.S. Patent Application Serial No. 14/245,342 titled "Super Smooth Paper Backing for Fine Grit Abrasives and Methods of Their Application and Use" of Vervacke filed on April 4, 2014, which is incorporated by reference herein.

IV. Backside Coating 16

As used herein, the term "backside coating" refers to a layer or coating on the backside of an abrasive paper, i.e., the side of the abrasive paper which does not have the layer of abrasive particles thereon. The backside coating 16 can be any suitable layer of or coating on the second surface 13 (i.e., the side of the abrasive backer) that is not configured to have a layer of abrasive particles thereon. Any such backside coating 16 can be utilized, as known in the art.

V. Abrasive Coating

The resulting cellulose-based abrasive backer has unexpected toughness, strength, and tear resistance. As such, the cellulose-based abrasive backer is particularly suitable for receiving an abrasive coating thereon to provide an abrasive surface on the abrasive backing sheet. For example, the abrasive coating can include abrasive particles dispersed within an adhesive material to define an adhesive surface.

Fig. 2 shows an abrasive coating 20 to define an abrasive surface 21 to form a sandpaper 25. As shown in the embodiment of Fig. 2, the abrasive coating 20 includes abrasive particles 22 dispersed within an adhesive material 24.

To attach abrasive particles to the coated surface of the abrasive backing, an adhesive is applied to the smooth, coated surface of the abrasive backing. Any of the known types of adhesives can be used to bond the abrasive particles to the second layer of synthetic polymeric composition. For example, the adhesive may be thermosetting adhesive, such as, by way of illustration only, epoxy resins, epoxy esters, phenolics, polyurethanes, polyesters, and alkyds. Water-based dispersions such as an ammonia-dispersed ethylene-vinyl acetate copolymer also can be employed. The selection of adhesive typically is dictated by the end use, but the adhesive must be compatible with the synthetic polymeric coating over which it is applied. Phenolics or resoles are most useful for very tough, coarse abrasive products for rough finishing or shaping, especially where the product needs to be waterproof as well. More flexible adhesives such as epoxy resins and alkyds are also waterproof and are desirable for fine-finishing products. For dry sanding products, animal glues and water based synthetic resins may be used.

Any generally accepted means of applying adhesive to a sheet material can be employed, including such methods as roll, reverse roll, gravure, and Meyer rod coating.

Curing temperatures desirably will be kept below about 125 °C, as higher temperatures also tend to distort the paper.

In general, any of the commonly employed abrasive materials known to those having ordinary skill in the art can be used. Such materials can vary from very coarse to very fine. Exemplary abrasive materials include silicon carbide, aluminum oxide, garnet, and diamond, by way of illustration only.

In one embodiment, the bonding adhesive may be dissolved or dispersed in a solvent or carrier and the mixture is then applied by a pressure coating nip to the abrasive backing. The abrasive grit particles are then deposited on the moving abrasive backing before the solvent or carrier is driven off, and while the adhesive is still fluid. The grit particles may be oriented or aligned, for example by electrostatic means, to maximize abrasive or cutting properties. Desirably, no external pressure is applied to the particles after deposition, as this may tend to destroy the alignment of particles, or bury the particles in the backing, both of which are undesirable. After the solvent or carrier is driven off, the abrasive backing carrying the adhesive and grit may be passed through an oven which heats the material for times ranging from several minutes to several hours to cure the adhesive and to firmly bond the grit therein.

In general, any of the commonly employed abrasive materials known to those having ordinary skill in the art can be used. Such materials can vary from very coarse to very fine. Exemplary abrasive materials include silicon carbide, aluminum oxide, garnet, and diamond, by way of illustration only.

If desired, one or more layers of an adhesive or other material can be formed over the layer of abrasive particles. Such a layer can serve to better anchor all of the abrasive particles to the abrasive sheet material, thereby reducing abrasive loss during use and increasing the life of the abrasive sheet material. For example, after the grit is firmly bound to the backing, a "grain size" coating may be applied over the layer of abrasive particles. The grain size coating may be a hard, thermosetting resin or animal glue which anchors the particles more firmly so that they remain aligned for maximum cutting ability.

The size of the abrasive particles or grit can be controlled based on the desired sanding or polishing characteristics of the finished product. For example, by utilizing very fine or super fine abrasive materials (e.g., less than 6 microns in average diameter), abrasive sheet materials also can be produced and used for fine sanding and polishing operations.

B. Cellulose-Based Abrasive Backers

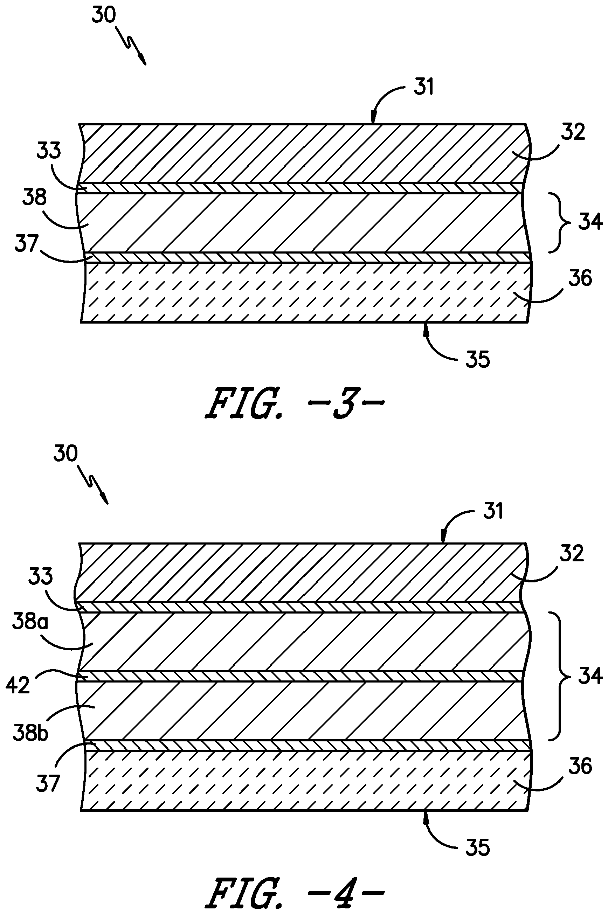

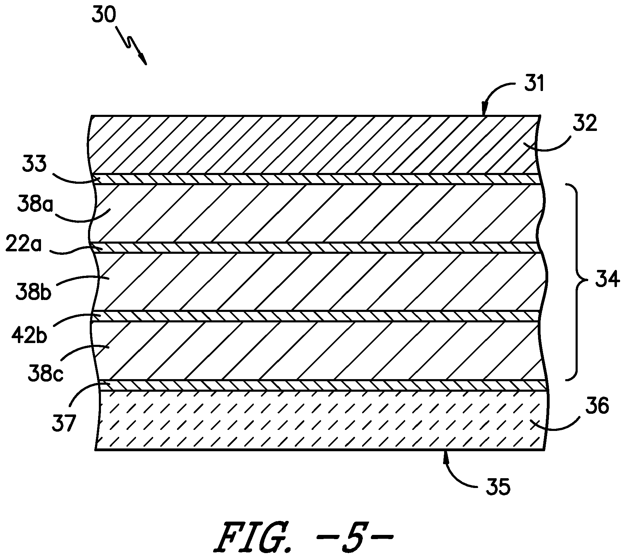

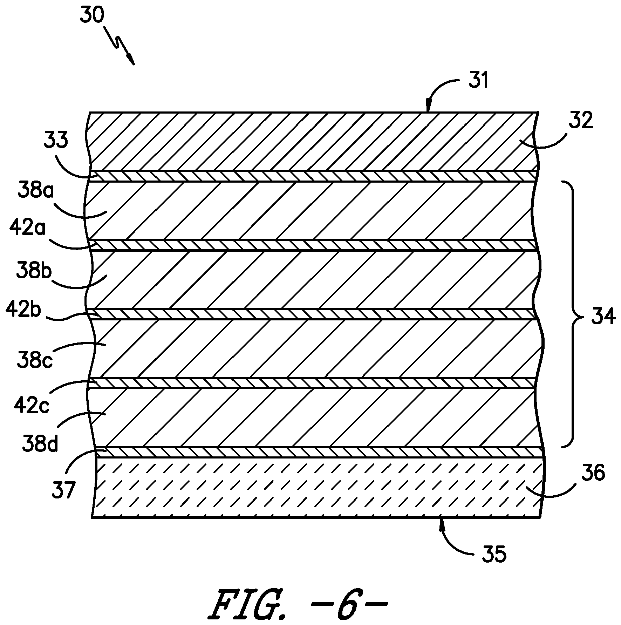

In another embodiment, the cellulose-based abrasive backer is a laminate formed from a plurality of ply sheets. In most embodiments, the number of ply sheets is about 2 to about 10 in the laminate, although the number of plies can be varied depending on the desired end product thickness and strength, the size and composition of the ply sheets, etc. For example, the cellulose-based abrasive backer can be formed from 3 laminated ply sheets (see e.g., Fig.3), 4 laminated ply sheets (see e.g., Fig. 4), 5 laminated ply sheets (see e.g., Fig. 5), or 6 laminated ply sheets (see e.g., Fig. 6).

Referring to Fig. 3, an exemplary cellulose-based abrasive backer 30 is shown formed from three ply sheets laminated together. Specifically, a middle ply sheet 38 (forming the middle section 34) is positioned between a top outer ply sheet 32 and a bottom outer ply sheet 36. The top outer ply sheet 32 and the bottom outer ply sheet 36 define, respectively, a top outer surface 31 and a bottom outer surface 35 of the backer 30. A first adhesive layer 33 is positioned between the top outer ply sheet 32 and the middle ply sheet 38, and a second adhesive layer 37 is positioned between the bottom outer ply sheet 36 and the middle ply sheet 38.

Referring now to Fig. 4, an exemplary cellulose-based abrasive backer 30 is shown formed from four ply sheets laminated together. In this embodiment, the middle section 34 is formed from two middle ply sheets 38a, 38b with a middle adhesive layer 42 positioned therebetween. Fig. 5 shows another exemplary cellulose-based abrasive backer 30 formed from five ply sheets laminated together, with the middle section 34 formed from three middle ply sheets 38a, 38b, 38c with middle adhesive layers 42a, 42b positioned therebetween. Similarly, Fig. 6 shows an exemplary cellulose-based abrasive backer 30 formed from six ply sheets laminated together, with the middle section 34 formed from four middle ply sheets 38a, 38b, 38c, 38d with middle adhesive layers 42a, 42b, 42c positioned therebetween.

An additional top coating or coatings (not shown) can optionally be present on the top outer surface 31 of the top outer ply sheet 32 and/or the bottom outer surface 35 of the bottom outer ply sheet 36 to define the exposed surface. For example, the top coating can be a film forming coating, a barrier coating, a semi-porous coating, etc. Thus, the cellulose-based abrasive backer 30 can be further tailored depending on the desired end use of the sheet through additional coating(s) thereon. For example, the additional coatings can be applied at a basis weight of about 3 gsm to about 30 gsm.

In one embodiment, the additional coatings can include the top coating 14 discussed above in section A.III., which is repeated herein. For example, a barrier coating can be applied onto the nonwoven web, following saturation, as disclosed in U.S. Patent Application Serial No. 14/245,342 titled "Super Smooth Paper Backing for Fine Grit Abrasives and Methods of Their Application and Use" of Vervacke filed on April 4, 2014, which is incorporated by reference herein. In one embodiment, the barrier coating can be subjected to a calendering step in a heated soft nip calender to produce the super smooth surface on the barrier coating. As stated above, a latex polymeric binder can be included in the barrier coating, such as those described above with respect to the saturant composition. Particularly suitable latex polymeric binders are those that adhere or bond well to the saturated, nonwoven web 10. For example, one particularly suitable latex polymeric binder for the barrier coating includes an acrylic latex binder. Suitable polyacrylic latex binders can include polymethacrylates, poly(acrylic acid), poly(methacrylic acid), and copolymers of the various acrylate and methacrylate esters and the free acids; ethylene-acrylate copolymers; vinyl acetate-acrylate copolymers, and the like. Suitable acrylic latex polymers that can be utilized as the latex polymeric binder in the barrier coating include those acrylic latexes sold under the trade name HYCAR® by The Lubrizol Corporation (Wickliffe, Ohio), such as HYCAR 26706 acrylic emulsion.

In one embodiment, the additional coatings can include the abrasive coating 20 discussed above in section A.V., which is repeated herein, with or without another coating therebetween to provide an abrasive surface on the abrasive backing sheet. As discussed above, the abrasive coating can include abrasive particles dispersed within an adhesive material to define an adhesive surface.

Generally, each of the ply sheets utilized in the cellulose-based abrasive backer 30 is formed from a saturated nonwoven web, and can have the same composition or different compositions. That is, the composition of the saturated nonwoven web can be tailored depending on the positioning within the cellulose-based abrasive backer (e.g., the top outer ply sheet 32, one of the middle ply sheet(s) 38, or the bottom outer ply sheet 36).

The saturated nonwoven web of each ply sheet is formed from a nonwoven web that includes hardwood cellulosic fibers and synthetic fibers, such as discussed above with respect to the single ply embodiment (see e.g., section A.I., which is repeated herein).

Upon drying the nonwoven web, a saturating composition can be applied onto or into the nonwoven web, as discussed above in section A.II.a.-c., which are repeated herein. Generally, the saturating composition includes a curable latex polymer that is crosslinked upon curing (e.g., self-crosslinking, with the aid of a crosslinking agent or crosslinked to a crosslinking agent, such as a resin). The saturating composition can be applied to the paper backing sheet according to any method, including before, after, or during the paper making process, such as described above (see e.g., section A. II.d., which is repeated herein). Preferably, the saturating composition is saturated into the fibrous web after it is formed. The saturated nonwoven web is calendered after saturation, such as described above (see e.g., section A.II.d.).

An adhesive coating is applied to the individual ply sheets on one or both surfaces, depending on the ply sheet's final positioning within the abrasive backer laminate. For example, an adhesive coating can be applied to both surfaces of the middle ply sheets, but only the inner surfaces of the top outer ply sheet and the bottom outer ply sheet. Then, the top outer ply sheet and the bottom outer ply sheet can be positioned on either side of the dual- coated middle ply sheet(s) such that the adhesive coating faces the middle ply sheet(s) and the uncoated surface is exposed on both the top outer ply sheet and the bottom outer ply sheet.

The types of adhesive materials can be similar to the composition of the saturant discussed above, but is not likely to be identical to the saturant composition. For example, in one embodiment, a vinyl acetate can be included within an adhesive coating.

The adhesive coating can be applied onto the saturated nonwoven web to a basis weight of about 2 gsm to about 40gsm, in certain embodiments. Generally, due to the relatively high porosity of the saturated nonwoven web, the adhesive composition can stay on the applied surface to ensure good lamination to another ply sheet.

Once positioned into a stack of ply sheets with at least one layer of an adhesive coating between each individual ply sheet, the stack of ply sheets can be laminated together through heat and pressure. However, the amount of heat and pressure applied to the stack of ply sheets is kept at temperatures below that of the softening point or melting point of the synthetic fibers such that the synthetic fibers keep their as-laid shape and physical construction in the resulting abrasive backer laminate. Thus, the structural and physical integrity of the synthetic fibers is kept intact in the individual ply sheets in order to allow the synthetic fibers to provide strength properties to the abrasive backer laminate.

For example, when polyester synthetic fibers (having a softening point in the vicinity of about 465 °F and a melting point in the vicinity of about 500 °F) are utilized, the stack of ply sheets can be laminated at a temperature of about 250 °F to about 350 °F (e.g., about 275 °F to about 325 °F) and at a pressure of about 50 psi to about 200 psi (e.g., about 100 psi to about 175 psi) to ensure that the polyester synthetic fibers retain their structural integrity.

The resulting laminated cellulose-based abrasive backer has unexpected toughness, strength, and tear resistance.

## EXAMPLE 1

Two different laminates of 5 ply sheets were prepared and then compared to a commercially available vulcanized fiber sheet. For each of the prepared laminates, the same process was performed, but for the type of cellulose fibers used (one hardwood, the other softwood).

The hardwood laminate was prepared according to the following method:

A. 100% eucalyptus fibers were refined for 10 minutes in a valley beater.

B. A wet strength additive (Kymene® 913A) was added at 0.03 wt% on the dry fiber.

C. 10 wt% of 3/4 inch 12 dpf polyester fibers (MiniFibers, Inc.) was added to the eucalyptus fibers.

D. Sheets were formed from the fiber mixture at a weight of 22 pounds/ream (82.7 gsm) based on the dried weight following drying.

E. The dried sheets were saturated to 60 pickup (37.5 wt% based on the dried weight) of the saturating composition according to Table 1.

Table 1:

| Ingredients | Solids | Parts | Dry | Wet |
|-------------|--------|-------|-----|-----|
| Water       |        |       |     | 42  |

(continued)

| Ingredients | Solids | Parts | Dry | Wet |
|---|---|---|---|---|
| Ammonia | | | | 3 |
| Hycar 26138 | 47.97 | 100 | 100 | 208.5 |
| Scriptset 540 | 9.5 | 2 | 2 | 21.1 |
| totals | 37.16 | | 102 | 274.52 |

F. The saturated sheets were calendered with a super calender using the weight of the calender rolls to about 8 mils.

G. The calendered, saturated sheets were cured for 20 minutes at 130 °C.

H. The cured sheets were then coated with a laminating adhesive to about 3.5 pounds/ream to about 4.0 pounds /ream (about 13.1 gsm to about 15.1 gsm). One side of the sheet was coated onto plies used as outer plies, and both sides of the sheet was coated onto plies used as middle sheets.

I. A 5 ply laminate construction (top outer ply sheet, three middle ply sheets, and a bottom outer ply sheet) was heat pressed at 295 °F for 30 pounds per linear inch (PLI) for 2 minutes, and then cooled to room temperature.

This process was repeated for the softwood example, except for the substitution of 5 NBSK fibers (Northern bleached softwood kraft fibers) for eucalyptus fibers.

The strength properties are shown in Table 2.

Table 2:

| | Basis Weight | | Caliper (mils) | Tensile (kg/15mm) | | Stretch (%) | | Delam. (g/15mm) |
|---|---|---|---|---|---|---|---|---|
| | #/r | gsm | | MD | CD | MD | CD | MD |
| Vulcanized Fiber Sheet | 262 | 984 | 31 | 165 | 89 | 9.6 | 18.9 | no |
| Softwood Fiber Sheet | 203 | 765 | 40 | 73 | 81 | 8 | 9.5 | no |
| Hardwood Fiber Sheet | 203 | 765 | 32.1 | 141.1 | 101.8 | 6.3 | 13.1 | no |

As seen in Table 2, the hardwood fiber sheet has unexpected toughness and strength, especially compared to the softwood fiber sheet.

## EXAMPLE 2

A single ply backer was prepared and then compared to a commercially available vulcanized fiber sheet. The single ply backer included a paper web prepared according to the following method:

A. 100% eucalyptus fibers were refined for 10 minutes in a valley beater.

B. A wet strength additive (Kymene® 913A) was added at 0.03 wt% on the dry fiber.

C. 10 wt% of 3/4 inch 12 dpf polyester fibers (MiniFibers, Inc.) was added to the eucalyptus fibers.

D. Sheets were formed from the fiber mixture at a weight of 22 pounds/ream (82.7 gsm) based on the dried weight following drying.

E. The dried sheets were saturated to 60 pickup (37.5 wt% based on the dried weight) of the saturating composition according to Table 3.

Table 3:

| Ingredients | Solids | Parts | Dry | Wet |
|---|---|---|---|---|
| Water | | | | 42 |
| Ammonia | | | | 3 |
| Hycar 26138 | 47.97 | 100 | 100 | 208.5 |
| Scriptset 540 | 9.5 | 2 | 2 | 21.1 |

(continued)

| Ingredients | Solids | Parts | Dry | Wet |
|---|---|---|---|---|
| totals | 37.16 | | 102 | 274.52 |

F. The saturated sheets were calendered with a super calender using the weight of the calender rolls to about 8 mils.
G. The calendered, saturated sheets were cured for 20 minutes at 130 °C.

## EXAMPLE 3

Three criteria was utilized to test samples to qualify for use as a vulcanized fiber replacement as an abrasive backing in sanding applications. First, the converted abrasive disk must retain its integrity when spun at 150 meters/sec. Second, the converted abrasive disk must match the VF product in stock removal tests. Third, the converted abrasive disk must pass manual sanding and use tests, which is a subjective test.

In order to pass all three of these tests, the sample must have three critical properties:

1. The single ply or multiple ply laminate must have an internal bond strength or delamination strength that exceeds 1800 g/15mm. This is noted as no delamination in these tests (Munising QA 254) as our current method has an upper limit of about 1800g/15mm.
2. The uninitiated tear or Finch tear must be similar to or higher than Vulcanized fiber per unit caliper.
3. The laminate must have a toughness per unit density that is about 700 or higher, which is defined as:

$$CD\ TEA*(MD\ tensile\ strength + CD\ tensile\ strength)/2* density*10$$

where:

CD TEA is cross-directional tensile energy absorption, and is measured by Munising test method QA303;
MD tensile strength is machine direction tensile strength, and is measured by Munising test method QA203;
CD tensile strength is cross direction tensile strength, and is measured by Munising test method QA303; and density is expressed in pounds/ft$^3$, and is calculated by dividing the measured by basis weight of the sample by its caliper.

In this Example, samples were made according to the process described in Example 2 with the following cellulose (and poly) compositions:

Sample A: 32.9 mil /3ply / 88% Softwood/ 12% Hardwood / saturant is Rhoplex HA16;
Sample B: 15 mil / 1 ply / 75% SW/25% HW / saturant is Hycar 26138;
Sample C: 40.4 mil / 3 ply / 79% SW/4% HW/17% polyester fibers / outer plies saturant is Hycar 26138 and inner ply saturant is Rhoplex HA16;
Sample D: 40.4 mil / repeat of sample C;
Sample E: 50.8 mil / repeat of samples C with barrier coatings;
Sample F: 43.1 mil / repeat of sample C;
Sample G: 33.7 mil/ 5 ply / 90% HW (Eucalyptus)/10% PE / saturant is Hycar 26138 but the lamination between the plies failed;
Sample H: 32 mil / 5 ply / 90% HW (Eucalyptus)/10% PE / Saturant is Hycar 26138;
Sample I: 33 mil / Repeat of Sample H;
Sample K: 30.6 mil / repeat of samples H;
Sample M: repeat of Sample A;
Sample N: Repeat of sample G; and
Sample VF: vulcanized fiber sheet having a thickness of 0.80 mm, purchased under the tradename Dynos® from DYNOS GmbH (Troisdorf, Germany).

The results surprisingly showed that Samples H, I, and K (all with relatively high hardwood fiber content) performed better than those samples formed with a higher content of softwood fibers. Samples G and N failed the delamination criteria (#1) as the lamination adhesive was weaker than the z direction strength of the base sheet.

**Claims**

1. A cellulose-based abrasive backer, comprising:

   a saturated nonwoven web defining a first surface and a second surface, wherein the saturated nonwoven web comprises a cured saturant composition and a non woven web of fibers, wherein the fibers consist essentially of 80 wt% to 96 wt% cellulosic fiber and 4 wt % to 20 wt% synthetic polyester fiber, wherein about 80 wt% to about 100 wt% of the cellulosic fibers within the nonwoven web are hardwood fibers wherein the synthetic fibers serve as high tensile strength fibers to increase the tear resistance of the nonwoven web, and wherein the cured saturant composition comprises a curable latex polymeric binder, a film forming resin, and optional additional components; and
   a top coating comprising a film forming coating, a barrier coating or a semi-porous coating on the first surface of the saturated nonwoven web.

2. The cellulose-based abrasive backer as in claim 1, wherein the top coating defines an exposed surface on the abrasive backer.

3. The cellulose-based abrasive backer as in claim 1, further comprising:
   a backside coating on the second surface of the saturated nonwoven web.

4. The cellulose-based abrasive backer as in claim 1, wherein about 90 wt% to about 100 wt% of the cellulosic fibers within the nonwoven web are hardwood fibers.

5. The cellulose-based abrasive backer as in claim 1, wherein the cellulosic fibers within the nonwoven web are substantially free from softwood fibers.

6. The cellulose-based abrasive backer as in claim 1, wherein the synthetic fibers have an average length that is about 0.25 inches to about 1.5 inches.

7. The cellulose-based abrasive backer as in claim 1, wherein the top coating is directly on the first surface of the saturated nonwoven web.

8. The cellulose-based abrasive backer as in claim 1, wherein the top coating is a barrier coating.

9. The cellulose-based abrasive backer as in claim 8, wherein the barrier layer comprises an acrylic latex binder.

10. A method of forming a cellulose-based abrasive backer, the method comprising:

    saturating a nonwoven web with a saturating composition to form a saturated nonwoven web, wherein the nonwoven web comprises a mixture of fibers consisting of 80 wt% to 96 wt% cellulosic fibers and 4 wt% to 20 wt% synthetic polyester fibers, wherein the saturating composition comprises a curable latex polymer, a film forming resin, and optional additional components wherein the synthetic fibers serve as high tensile fibers to increase the tear resistance of the non-woven web, and wherein about 80 wt% to 100 wt% of the cellulosic fibers within the non-woven web are hardwood fibers;
    calendering the saturated nonwoven web;
    curing the saturated nonwoven web such that the curable latex polymer is crosslinked; and
    applying a top coating comprising a film forming coating, a barrier coating or a semi-porous coating onto at least one surface of the cured, saturated nonwoven web.

11. The cellulose-based abrasive backer of claim 1, comprising:
    at least two ply sheets laminated together, wherein each ply sheet comprises the saturated nonwoven web of claim 1.

12. The cellulose-based abrasive backer of claim 11, wherein the cellulose-based abrasive backer comprises:

    a top outer ply sheet;
    at least one middle ply sheet; and
    a bottom outer ply sheet,
    wherein the top outer ply sheet, the middle ply sheet, and the bottom outer ply sheet are laminated together such that the middle ply sheet is positioned between the top outer ply sheet and the bottom outer ply sheet, and wherein each of the top outer ply sheet, the middle ply sheet, and the bottom outer ply sheet comprise a saturated nonwoven web comprising cellulosic fibers, synthetic fibers, and a cured saturant composition, and further wherein about 80 wt% to about 100 wt% of the cellulosic fibers within the nonwoven web are hardwood fibers.

13. The cellulose-based abrasive backer as in claim 12, wherein the top outer ply sheet, the middle ply sheet, and the bottom outer ply sheet are laminated together such that the top outer ply sheet and the bottom outer ply sheet define exposed surfaces of the cellulose-based abrasive backer.

14. The cellulose-based abrasive backer as in claim 12, wherein a first adhesive coating is positioned between the top outer ply sheet and the middle ply sheet, and wherein a second adhesive coating is positioned between the middle ply sheet and the bottom outer ply sheet.

**Patentansprüche**

1. Schleifmittelträger auf Zellulosebasis, umfassend:

   - einen getränkten Vliesstoff, der eine erste Oberfläche und eine zweite Oberfläche definiert, wobei der getränkte Vliesstoff eine gehärtete Tränkmittelzusammensetzung und einen Vliesstoff aus Fasern umfasst, wobei die Fasern im Wesentlichen aus 80 Gew.-% bis 96 Gew.-% Cellulosefaser und 4 Gew.-% bis 20 Gew.-% synthetischer Polyesterfaser bestehen, wobei etwa 80 Gew.-% bis etwa 100 Gew.-% der Zellulosefasern in dem Vliesstoff Hartholzfasern sind, wobei die synthetischen Fasern als Fasern mit hoher Zugfestigkeit zur Steigerung der Reißfestigkeit des Vliesstoffs dienen, und wobei die gehärtete Tränkmittelzusammensetzung ein härtbares Latexpolymer-Bindemittel, ein filmbildendes Harz und wahlweise zusätzliche Komponenten umfasst; und
   - eine Deckschicht auf der ersten Oberfläche des getränkten Vliesstoffs, die eine filmbildende Beschichtung, eine Sperrschicht oder eine semiporöse Beschichtung umfasst.

2. Schleifmittelträger auf Zellulosebasis nach Anspruch 1, wobei die Deckschicht eine freiliegende Oberfläche auf dem Schleifmittelträger definiert.

3. Schleifmittelträger auf Zellulosebasis nach Anspruch 1, ferner umfassend:

   - eine rückseitige Beschichtung auf der zweiten Oberfläche des getränkten Vliesstoffs.

4. Schleifmittelträger auf Zellulosebasis nach Anspruch 1, wobei etwa 90 Gew.-% bis etwa 100 Gew.-% der Zellulosefasern innerhalb des Vliesstoffs Hartholzfasern sind.

5. Schleifmittelträger auf Zellulosebasis nach Anspruch 1, wobei die Zellulosefasern in der Vliesstoffbahn im Wesentlichen frei von Weichholzfasern sind.

6. Schleifmittelträger auf Zellulosebasis nach Anspruch 1, wobei die synthetischen Fasern eine durchschnittliche Länge von etwa 0,25 bis etwa 1,5 Zoll haben.

7. Schleifmittelträger auf Zellulosebasis nach Anspruch 1, wobei die Deckschicht direkt auf der ersten Oberfläche des getränkten Vliesstoffs liegt.

8. Schleifmittelträger auf Zellulosebasis nach Anspruch 1, wobei die Deckschicht eine Sperrschicht ist.

9. Schleifmittelträger auf Zellulosebasis nach Anspruch 8, wobei die Sperrschicht ein Acryllatex-Bindemittel umfasst.

10. Verfahren zur Herstellung einer Schleifmittelunterlage auf Zellulosebasis, wobei das Verfahren umfasst:

   - Tränken eines Vliesstoffs mit einer Tränkmittelzusammensetzung zur Bildung eines getränkten Vliesstoffs, wobei der Vliesstoff eine Mischung aus Fasern umfasst, die aus 80 Gew.-% bis 96 Gew.-% Cellulosefasern und 4 Gew.-% bis 20 Gew.-% synthetischen Polyesterfasern besteht, wobei die Tränkmittezusammensetzung ein härtbares Latexpolymer, ein filmbildendes Harz und optionale zusätzliche Komponenten umfasst, wobei die synthetischen Fasern als Fasern mit hoher Zugfestigkeit zur Steigerung der Reißfestigkeit des Vliesstoffs dienen, und wobei etwa 80 Gew.-% bis 100 Gew.-% der Zellulosefasern innerhalb des Vliesstoffs Hartholzfasern sind;

- Kalandrieren des getränkten Vliesstoffs;
- Härten der getränkten Vliesstoffbahn, so dass das härtbare Latexpolymer vernetzt wird; und
- Aufbringen einer Deckschicht, die eine filmbildende Beschichtung, eine Sperrschicht oder eine halbporöse Beschichtung umfasst, auf mindestens eine Oberfläche des ausgehärteten, getränkten Vliesstoffs.

**11.** Schleifmittelträger auf Zellulosebasis nach Anspruch 1, umfassend:

- mindestens zwei miteinander laminierte Lagen, wobei jede Lage den getränkten Vliesstoff nach Anspruch 1 umfasst.

**12.** Schleifmittelträger auf Zellulosebasis nach Anspruch 11, wobei der Schleifmittelträger auf Zellulosebasis umfasst:

- eine obere Außenlage;
- mindestens eine Mittenlage; und
- eine untere Außenlage,

wobei die obere Außenlage, die Mittenlage und die untere Außenlage so miteinander laminiert sind, dass die Mittenlage zwischen der oberen Außenlage und der unteren Außenlage angeordnet ist, und wobei sowohl die obere Außenlage als auch die Mittenlage und die untere Außenlage eines getränkten Vliesstoffs umfassen, die Zellulosefasern, synthetische Fasern und eine gehärtete Tränkmittelzusammensetzung umfasst, und wobei ferner etwa 80 Gew.-% bis etwa 100 Gew.-% der Zellulosefasern innerhalb des Vliesstoffs Hartholzfasern sind.

**13.** Schleifmittelträger auf Zellulosebasis nach Anspruch 12, wobei die obere Außenlage, die Mittenlage und die untere Außenlage so miteinander laminiert sind, dass die obere Außenlage und die untere Außenlage freiliegende Oberflächen des Schleifmittelträgers auf Zellulosebasis definieren.

**14.** Schleifmittelträger auf Zellulosebasis nach Anspruch 12, wobei zwischen der oberen Außenlage und der Mittenlage eine erste Klebstoffschicht angeordnet ist und wobei zwischen der Mittenlage und der unteren Außenlage eine zweite Klebstoffschicht angeordnet ist.

## Revendications

**1.** Support abrasif à base de cellulose comprenant
une toile non tissée, saturée définissant une première surface et une seconde surface,
la toile non tissée saturée comprenant une composition saturée durcie et une toile non tissée de fibres,
les fibres étant composées principalement de 80%-96% pondéraux de fibres de cellulose et de 4%-20% pondéraux de fibres de polyester de synthèse,
environ 80% jusqu'à environ 100% pondéraux des fibres cellulose dans la toile non tissée étant des fibres de bois dur,
les fibres de synthèse servant de fibres à forte résistance en traction pour augmenter la résistance en traction de la toile non tissée et
la composition saturée, durcie comprenant un liant de latex polymère durcissable, une résine formant un film et des composants additionnels en option et
un revêtement de dessus comprenant un revêtement formant un film, un revêtement formant une barrière ou un revêtement semi-poreux sur la première surface de la toile non-tissé saturée.

**2.** Support abrasif à base de cellulose selon la revendication 1 dans lequel
le revêtement de surface définit une surface exposée du support abrasif

**3.** Support abrasif à base de cellulose selon la revendication 1 comprenant en outre un revêtement de dos de la seconde surface de la toile non tissée saturée.

**4.** Support abrasif à base de cellulose selon la revendication 1 dans lequel environ 90% en poids jusqu'à environ 100% en poids des fibres de cellulose de la toile non tissée sont des fibres de bois dur.

**5.** Support abrasif à base de cellulose selon la revendication 1 dans lequel les fibres de cellulose de la toile non tissée sont principalement sans fibres de bois mou.

**6.** Support abrasif à base de cellulose selon la revendication 1 dans lequel
les fibres de synthèse ont une longueur moyenne de l'ordre de 6mm à environ 13mm.

**7.** Support abrasif à base de cellulose selon la revendication 1 dans lequel
le revêtement de dessus est directement sur la première surface de la toile non tissée saturée

**8.** Support abrasif à base de cellulose selon la revendication 1 dans lequel
le revêtement de dessus est un revêtement barrière

**9.** Support abrasif à base de cellulose selon la revendication 8 dans lequel le revêtement barrière comprends un liant de latex acrylique

**10.** Procédé pour former un support abrasif à base de cellulose, procédé consistant à

- saturer une toile non tissée avec une composition de saturation pour former une toile non tissée saturée, la toile non tissée comprenant un mélange de fibres de 80% -96% pondéraux de fibres de cellulose et 4%-20% pondéraux de fibres polyester de synthèse,
la composition de saturation comprenant un polymère de latex durcissable, une résine formant un film et des composants additionnels en option, les fibres de synthèse servant de fibres à forte résistance à la traction pour augmenter la résistance à la traction de la toile non tissée et environ 80% jusqu'à 100% pondéraux des fibres de cellulose de la toile non tissée sont des fibres de bois dur,
- calandrer la toile non tissée saturée,
- faire durcir la toile non tissée saturée de façon que le polymère delatex durcissable soit réticulé et appliqué à un revêtement de dessus comprenant un revêtement formant un film, un revêtement barrière ou un revêtement semi-poreux sur moins une surface de la toile non tissée, saturée, durcie.

**11.** Support abrasif a base cellulose selon la revendication 1 comprenant :
au moins deux feuilles contreplaquée, laminées l'une à l'autre, chaque feuille étant une toile non tossée selon la revendication 1.

**12.** Support abrasif à base de cellulose selon la revendication 11 dans lequel
le support abrasif de cellulose comprend

- une feuille extérieure de dessus
- au moins une feuille intermédiaire
- une feuille extérieure de dessous,

la feuille extérieure de dessus, la feuille intermédiaire et la feuille extérieure de dessous étant laminées de façon que la feuille intermédiaire soit positionnée entre la feuille extérieure de dessus et la feuille extérieure de dessous et chaque feuille extérieure de dessus, feuille intermédiaire et feuille extérieure de dessous étant composée d'une toile non tissée saturée avec des fibres de cellulose, des fibres de synthèse et une composition saturée durcie et en outre environ 80% pondéraux jusqu'à environ 100% pondéraux de fibres de cellulose dans la toile non tissée sont des fibres de bois dur.

**13.** Support abrasif à base de cellulose selon la revendication 12 dans lequel
la feuille extérieure de dessus, la feuille intermédiaire et la feuille extérieure de dessous sont laminées les unes aux autres pour que la feuille extérieure de dessus et la feuille extérieure de dessous définissent des surfaces exposées du support abrasif à base de cellulose.

**14.** Support abrasif de cellulose selon la revendication 12 dans lequel un premier revêtement adhésif est placé entre la feuille extérieure de dessus et la feuille intermédiaire et un second revêtement adhésif est placé entre la feuille intermédiaire moyenne et la feuille extérieure de dessous.

FIG. -1-

FIG. -2-

FIG. -3-

FIG. -4-

FIG. —5—

FIG. -6-

CD  TEA*((MDten+CDten)/2)Density*10

FIG. —7—

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3700623 A, Keim
- US 3772076 A, Keim
- US 3885158 A, Petrovich
- US 3899388 A, Petrovich
- US 4129528 A, Petrovich
- US 4147586 A, Petrovich
- US 4222921 A, van Eanam
- US 3556932 A, Coscia
- US 3556933 A, Williams
- US 5595828 A, Weber
- US 20020168508, Reed
- US 24534214